# EUROPEAN PATENT APPLICATION

(11) **EP 1 328 124 A2**
(43) Date of publication of application: **16.07.2003**
(21) Application number: 03000079.8
(22) Date of filing: 08.01.2003
(51) Int. Cl.: H04N 7/24

(54) **Content server, mobile communication terminal, and control method for motion information**

(30) Priority: 09.01.2002 JP 2002002142
(71) Applicant: NTT DoCoMo, Inc., Tokyo 100-6150 (JP)
(72) Inventor: Hiramatsu, Yoshiaki, c/o NTT DoCoMo, Inc., Tokyo 100-6510 (JP); Wakabayashi, Tatsuaki, c/o NTT DoCoMo, Inc., Tokyo 100-6510 (JP); Yamada, Kazuhiro, c/o NTT DoCoMo, Inc., Tokyo 100-6510 (JP); Nagai, Riko, c/o NTT DoCoMo, Inc., Tokyo 100-6510 (JP)
(74) Representative: HOFFMANN - EITLE

(57) **Abstract**

In a content server (5), motion information data comprised of multiple motion information data segments is prepared. Individual segments of motion information data are played independently, and in an optional order. Then, pattern data for designating an order in which multiple motion information data segments are played is prepared. Multiple pattern data may be prepared for one item of motion information data. MS downloads motion information data and pattern data. Then, a user selects pattern data, and plays motion information data.

## Description

A Content Server and Its Control Method, A Mobile Communication Terminal and Its Control Method, and Program And Its Recording Media

### Technical Field

The present invention relates to a method and device for providing motion and other data to a mobile communication station (terminal) (MS).

### Background Art

Recently, there has been an increasing demand for supply of audio and video content and the like to mobile stations, typified by mobile phones. The data for audio and video content or the like are provided by a content server, for example on the Internet, at the request of a mobile station user.

However, a drawback with conventional server supply of such data is that the order in which content, graphics and the like, appear on a user's mobile phone is fixed. For example, in the case of audio and video content, the order in which pictures appear on the mobile station cannot be changed.

The present invention has been made with a view to overcoming the above-mentioned problems, and has as its object the provision of a method and device for providing motion and other data to a mobile station, the order of which data appearing as graphics or other content on the mobile station is able to be changed in various ways as desired by a user.

### Disclosure of Invention

To solve the above-mentioned problem a content server according to the present invention comprises a memory unit for storing motion information data comprised of multiple motion information data segments each of which can be played independently, and pattern data for designating an order in which the multiple motion information data segments are played, a reception unit for receiving a download request from a mobile communication terminal via a network, a control unit for generating download list data related to the motion information data and the pattern data, and a transmission unit for transmitting to the mobile communication terminal via the network, the download list data designating which the motion information data and the pattern data are to be downloaded.

Further, in a content server according to the present invention, one or multiple items of pattern data may be stored in the memory unit, and corresponding to one segment of motion information data.

A control method of a content server according to the present invention comprises a memory process for storing motion information data comprised of multiple motion information data segments each of which can be played independently, and pattern data for designating an order in which the multiple motion information data segments are played, a reception process for receiving a download request from a mobile communication terminal via a network, a control process for generating download list data related to the motion information data and the pattern data, and a transmission process for transmitting to the mobile communication terminal via the network, the download list data designating which the motion information data and the pattern data are to be downloaded.

A mobile communication terminal according to the present invention comprises a memory unit for storing motion information data comprised of multiple motion information data segments each of which can be played independently, and pattern data for designating an order in which the multiple motion information data segments are played, a control unit for generating a play data list related to the motion information data and the pattern data for enabling a user to designate which the motion information data and the pattern data are to be played, and a display unit for displaying the play data list.

Further, a mobile communication terminal according to the present invention may comprise a transmission unit for transmitting a motion information data request or a pattern data request to a content server via a network, and a reception unit for receiving motion information data or pattern data from the content server via the network.

Further, a mobile communication terminal according to the present invention comprises a memory unit for storing motion information data including multiple motion information data segments each of which can be played independently, an operation unit for designating an order in which multiple motion information data segments are played, and a control unit for generating pattern data for playing the motion information data segments on the basis of the designated play order and storing the pattern data in the memory unit.

A control method of a mobile communication terminal according to the present invention comprises a memory process for storing motion information data comprised of multiple motion information data segments each of which can be played independently, and pattern data for designating an order in which multiple motion information data segments are played, a control process for generating a play data list related to the motion information data and the pattern data for enabling a user to designate in which the motion information data and the pattern data are to be played, and a display process for displaying the play data list.

A program product according to the present invention is for causing a computer to perform a step of storing motion information data comprised of multiple motion information data segments each of which can be played independently, and pattern data for designating an order in which the multiple motion information data segments are played, a step of receiving a download request from a mobile communication terminal via a network, a step of generating download list data related to the motion information data and the pattern data, and a step of transmitting to the mobile communication terminal via the network, the download list data for designating which the motion information data and the pattern data are to be downloaded. The program may be recorded in a recording media readable by a computer.

Further, a program product according to the present invention is for causing a computer to perform a step of storing motion information data comprised of multiple motion information data segments each of which can be played independently, and pattern data for designating an order in which the multiple motion information data segments are played, a step of generating a play data list related to the motion information data and the pattern data for enabling a user for to designate which the motion information data and the pattern data are to be played, and a step for displaying the play data list. The program may be recorded in a recording media readable by a computer.

### Brief Description of the Drawings

Fig.1 is a configuration diagram of communication system 100 according to the embodiment of the present invention.
Fig.2 is a pattern diagram illustrating the contents (motion information data area 55D) of memory unit 55 in content server 5 according to system 100.
Fig.3 is a pattern diagram illustrating the contents (pattern data area 55R) of memory unit 55 in content server 5 according to system 100.
Fig.4 is a flowchart showing the generation of motion information data and pattern data according to system 100.
Fig.5 is a sequence chart illustrating the operation details of system 100.
Fig.6 is a diagram showing an example of the display details displayed on display unit 18 in MS1 according to system 100.
Fig.7 is a diagram showing an example of the display details displayed on display unit 18 in MS1 according to system 100.
Fig.8 is a flowchart illustrating the control details of control unit 13 in MS1 according to system 100.

### Embodiments of the Invention

Embodiments of the present invention will be described with reference to the diagrams.

### A. Configuration of the embodiment

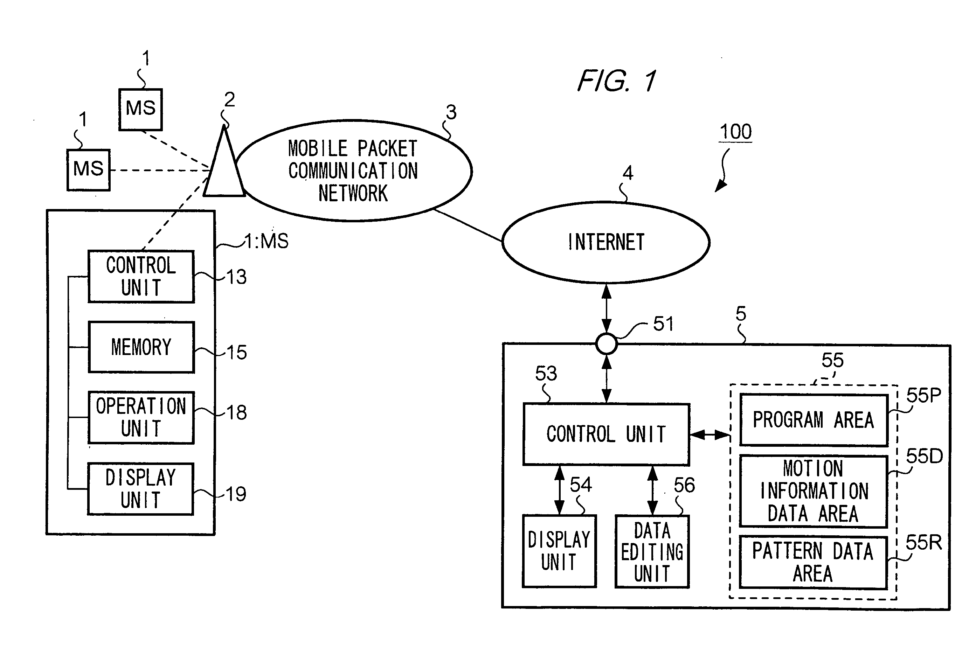

Fig.1 is a configuration diagram of communication system 100 according to the present invention. As shown in fig.1, a system 100 is comprised of MS (Mobile Stations) 1, a base station 2, a mobile packet communication network 3, the Internet 4, and a content server 5. System 100 may comprise more MS1 and base station 2 than shown in fig.1.

MS 1 comprises a control unit 13 comprised of a CPU(Central Processing Unit) and the like, a memory unit 15 comprised of ROM(Read Only Memory) and RAM(Random Access Memory), an operation unit 18 comprised of operation buttons and the like, and a display unit 19 comprised of a LCD(Liquid Crystal Display) and the like.

MS1 is connected to the Internet 4 via base station 2 and mobile packet communication network 3, and performs the transmission and reception of data with content server 5 connected to the Internet 4. A predetermined program for executing the transmission and reception of data is installed in memory unit 15.

Content server 5 is comprised of a transmission and reception unit 51, a control unit 53, a display unit 54, a memory unit 55, and a data editing unit 56.

Control unit 53 is comprised of a CPU, RAM, ROM, and the like, and controls each unit comprised of content server 5.

Further, display unit 54 has a display function, and is comprised of a LCD and the like.

Memory unit 55 is comprised of a hard disk and the like, and comprises a program area 55P, a motion information data area 55D, and a pattern data area 55R as shown in fig.1.

Various programs according to system 100 are installed in program area 55P in advance.

Various items of motion information data to be provided to MS1 are stored in motion information data area 55D. Motion information data according to the present embodiment is comprised of multiple motion information data segments. Individual motion information data segments can be played independently.

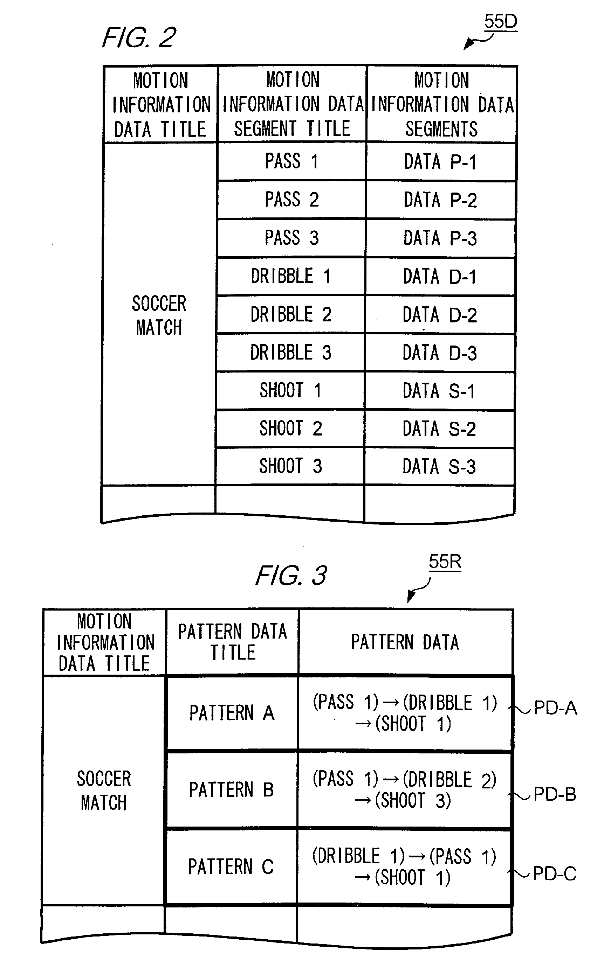

Fig.2 is a pattern diagram illustrating data stored in motion information data area 55D.

As mentioned above, a table to which a motion information data title, a motion information data segment title comprising motion information data, and motion information data segments,
corresponds respectively, is stored in motion information data area 55D.

Fig.2 is a pattern diagram when motion information data "Soccer Match" is stored in motion information data area 55D. In this figure, motion information data "Soccer Match" is comprised of data P-1(Pass First Scene), data P-2(Pass Second Scene)..., and data S-3(Shoot Third Scene), which are multiple motion information data segments. Since each item of multiple motion information data segments is independent as data it can, for example, be played in the order of data P-1->data D-1->data S-1 after retrieving data P-1, data D-1, and data S-1 as motion information data segments within the motion information data segments category "Soccer Match".

A variety of pattern data to be provided to MS 1 is stored in pattern data area 55R. Pattern data is the data for designating the order in which the motion information data segments are played.

Fig.3 is a pattern diagram of the data contents to be stored in pattern data area 55R. A table to which a motion information data title, a pattern data title, and pattern data corresponds respectively, is stored in pattern data area 55R.

Fig.3 is a pattern diagram showing an example of storing pattern data corresponding to three titles, (A Pattern), (B Pattern), and (C Pattern) as pattern data related to motion information data "Soccer Match". Pattern data PD-A corresponding to a title called (A Pattern) corresponds to data for retrieving data P-1, data D-1, and data S-1 among motion information data segments related to "Soccer Match", and designating to play in the order of data P-1->data D-1->data S-1. That is to say, "Pass First Scene" ->"Dribble First Scene" -> "Shoot First Scene".

Data editing unit 56 performs a process to generate motion information data and pattern data to be provided to MS1. Specifically, a generation process for motion information data and pattern data is performed on the basis of the operation details of operation unit 18 by an operator under the control of control unit 13.

### B. Operation of the embodiment

Next, the operation of the embodiment will be described with reference to the diagrams.

### B 1: Generation process of motion information data n and pattern data

At first, the operation details of a generation process for motion information data and pattern data will be described according to system 100.

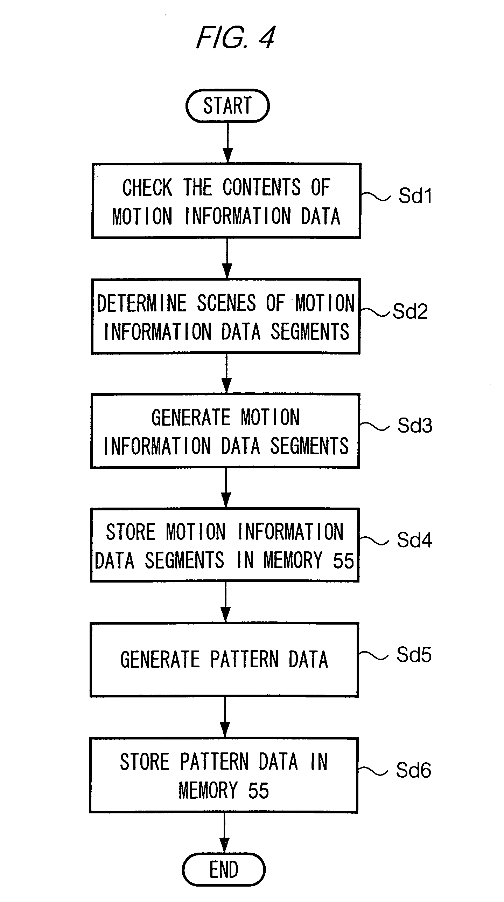

Fig.4 is a flowchart illustrating the operation details performed by control unit 53 on the basis of an operator's instructions.

An operator plays data to be distributed and confirms the data contents when obtaining data to be distributed to MS1.

In this embodiment, data to be distributed is encoded by an encoding algorism, such as MPEG(Motion Picture Experts Group). For this reason, control unit 53 causes display unit 54 to display data which is decrypted to be distributed on the basis of the operator's instructions. (Step Sd1)

An operator confirms the contents of data to be distributed by checking the display contents of display unit 54. Then, an operator determines which scenes are to be provided to MS1 as motion information data segments. (Step Sd2) For example, in the case of data to be distributed related to "Soccer Match", an operator retrieves " Shoot Scene", and "Dribble Scene" and the like, and treats the scenes as objects of motion information data segments. A retrieving method is optional, for example, individual scenes are specified by setting start time and end time of the play period. Then, each individual scene corresponds to motion information data segments, and motion information data segments which is collected become motion information data.

Control unit 53 extracts from data to be distributed which is decrypted, data corresponding to individual scenes retrieved by an operator. Then, the data extracted is encoded to generate motion information data segments. Specifically, control unit 53 generates motion information data segments on "Shoot Scene" and "Dribble Scene". Also, control unit 53 stores title information ("Pass 1", "Pass 2" and the like), which is input separately by an operator, in a header part of individual motion information data segments. (Step Sd3)

As mentioned above, motion information data segments which are generated in this way, are collected, and form one item of motion information data. In this case, one item of motion information data is "Soccer Match".

Control unit 53 generates a table to which motion information data segments related to motion information data "Soccer Match" correspond respectively, and store a table in motion information data 55D in memory unit 55. (Step Sd4)

Next, a generation process of pattern data will be described.

An operator plays some motion information data segments in an optional order (pattern) after generating motion information data segments forming motion information data. Then, an operator checks a play picture, and determines the play pattern of motion information data segments. For example, motion information data with regard to "Soccer Match", an operator selects data P-1, data D-1, and data S-1 which are motion information data segments, and plays them in the order of data P-1->data D-1->data S-1. Further, an operator changes a play order and plays in the order of data S-1->data S-1->data D-1->data P-1. Then, an operator checks the play picture, and determines pattern data which should be provided to a MS1's user.

Control unit 53 generates pattern data related to a play pattern determined by an operator. For example, when a pattern for playing in the order of data P-1->data D-1->data S-1 is determined as a play pattern about data P-1, data D-1, and data S-1 of motion information data segments, control unit 53 generates pattern data corresponding to a play pattern.

In this case, control unit 53 stores title information of pattern data ("Pattern A", "Pattern B" and the like) input by an operator separately, in a header part of pattern data. (Step Sd5)

Control unit 53 generates a table to which motion information data ("Soccer Match" in this case) and pattern data correspond respectively, and stores a table in motion information data area 55D in memory unit 55. (Step Sd6)

In the case of generating multiple pattern data for one item of motion information data, control unit 53 generates a table to which one item of motion information data and multiple pattern data corresponds each other, and stores a table in memory unit 55 (motion information data area 55D).

### B2: Download of motion information data and pattern data

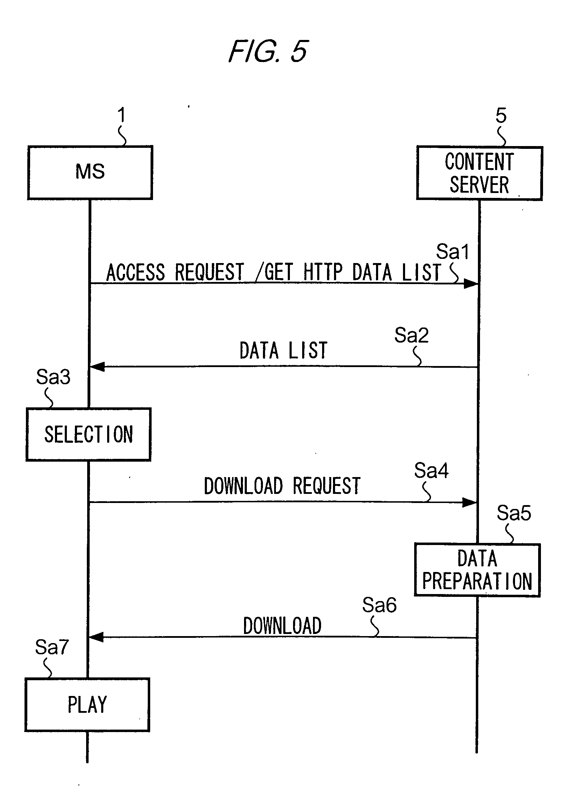

Fig.5 is a sequence chart illustrating the operation details when MS1 performs to download motion information data and pattern data.

### 1.Access Request (Step Sa1 in Fig.5)

When a user performs a predetermined operation, control unit 13 in MS1 performs a process connection to the Internet 4, and an access request to content server 5 connected to the Internet 4.

After an access request is permitted, and a communication channel with content server 5 is established, control unit 13 in MS1 requests to content server 5, downloadable data of a data list screen.

In fig.5, a command, "GET HTTP URL Data List" corresponds to a command for requesting list screen data of downloadable motion information data and downloadable pattern data.

### 2.Data List Transmission (Step Sa2 in Fig.5)

After receiving a command from MS1, control unit 53 in content server 5 generates list screen data comprised of the contents of motion information data and pattern data stored in memory unit 55 (motion information data area 55D, pattern data area 55R). In this example, control unit 53 generates list screen data related to motion information data, "Soccer Match", however, control unit 53 generates list screen data related to all motion information data if there is still other motion information data in addition to "Soccer Match".

Control unit 53 transmits generated list screen data to MS1 afterwards.

### 3. Selection and Download Request (Step Sa3, Sa4 in Fig.5)

After receiving list screen data, control unit 13 in MS 1 generates a picture on the basis of list screen data by using a Web browser function, and displays it on display unit 19.

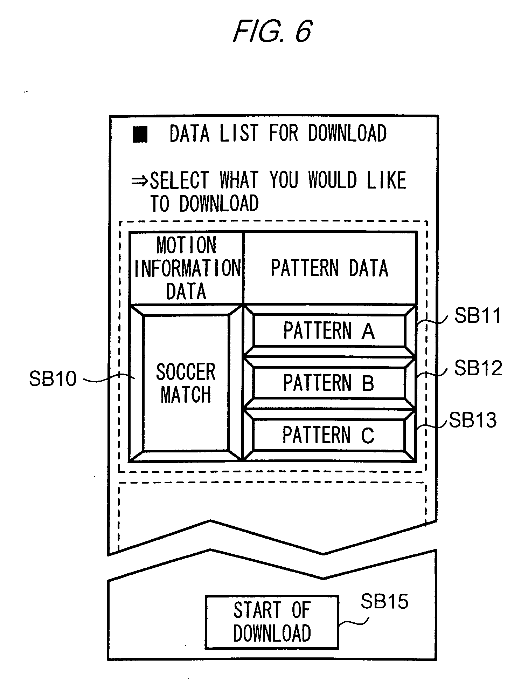

Fig.6 is a diagram showing an example of the details displayed on display unit 19 in MS1 in this case. Title information of pattern data ("Pattern A", "Pattern B", and "Pattern C") related to motion information data "Soccer Match" is shown. As shown in the diagram, Motion information data "Soccer Match" corresponds to SB10, and title information of pattern data ("Pattern A", "Pattern B", and "Pattern C") related to motion information data "Soccer Match" corresponds to SB11-13 respectively.

A user of MS 1 can recognize downloadable motion information data (In this example, "Soccer Match") and pattern data by checking the details exemplified in fig.6.

A user operates operation unit 18 in MS1, and clicks a soft button (SB10 in this case) for motion information data which the user would like to download, and a soft button for pattern data (SB11-SB13 in this case). Next, when the user clicks a soft button SB15 indicating " Start of Download ", information related to motion information data and pattern data which the user would like to download is transmitted to content server 5 as a download request.

It is also possible to request multiple motion information data and multiple pattern data as one download request. It is also possible to request only motion information data, or only pattern data when corresponding motion information data is already downloaded and the like.

### 4. Download of Motion Information Data (Step Sa5 and Step Sa6 in Fig.5)

After receiving a download request from MS1, control unit 53 in content server 5 extracts motion information data related to a download request from memory unit 55(motion information data area 55D), and transmits it to MS1. More specifically, control unit 53 extracts all motion information data segments comprising motion information data, and transmits them to MS1.

Further, control unit 53 extracts pattern data related to a download request from memory unit 55(pattern data area 55R), and transmits it to MS1.

Control unit 53 divides data to be transmitted in a packet form when transmitting each data. Then, control unit 53 attaches to a header part of individual packet, ID information assigned for MS 1 previously, and transmits individual packet to MS 1 sequentially.

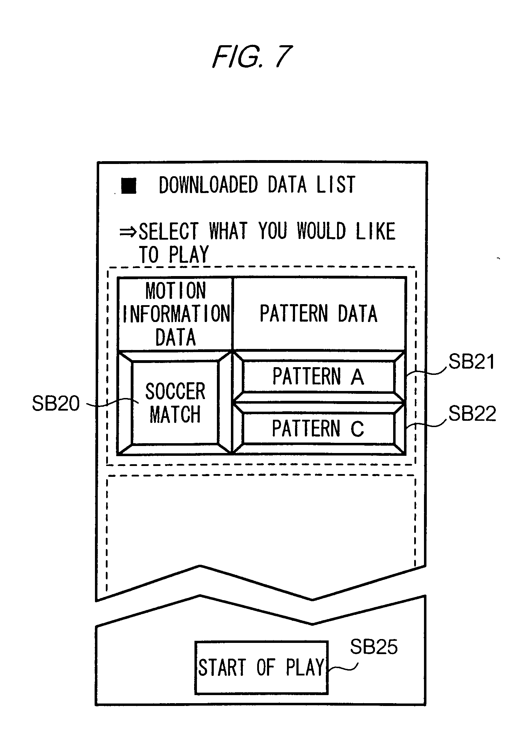

### 5. A Play Display of Motion Information Data after Download (Step Sa5 in Fig.7)

Control unit 13 in MS1 stores received motion information data and pattern data in memory unit 15 sequentially.

After the completion of download, MS1 performs a process related to replaying motion information data when a user performs a predetermined process. Specifically, control unit 13 in MS generates list screen data comprised of the contents of downloaded motion information data stored in memory unit 15 and the contents of pattern data, and performs a process to display list screen data on display unit 18.

Fig.7 is a diagram showing an example of the display details displayed on display unit 18 in this case. In this example, motion information data "Soccer Match", pattern data "Pattern A" related to motion information data "Soccer Match", and title information "Pattern C" corresponding to SB20-SB22 respectively are shown in fig 7.

A user of MS1 can recognize motion information data ("Soccer Match" in this example), and pattern data both of which can be played through the details in fig.7

A user operates operation unit 18 in MS1, and clicks a soft button of motion information data which the user would like to play, and a soft button of pattern data corresponding to motion information data. In this example, a user clicks a soft button SB 20 of motion information data, and either a soft button SB21, or SB22 of pattern data.

When a user clicks a soft button SB25 indicating "Start of Play", information related to motion information data, which a user would like to play, and pattern data is recognized by control unit 13 in MS1 as a play process request.

After receiving a play process request, control unit 13 in MS 1 retrieves the corresponding motion information data and pattern data from memory unit 15. Then, control unit 13 in MS1 performs a play process of motion information data segments comprising motion information data on the basis of the contents of pattern data. Then, control unit 13 in MS 1 displays the details on display 18.

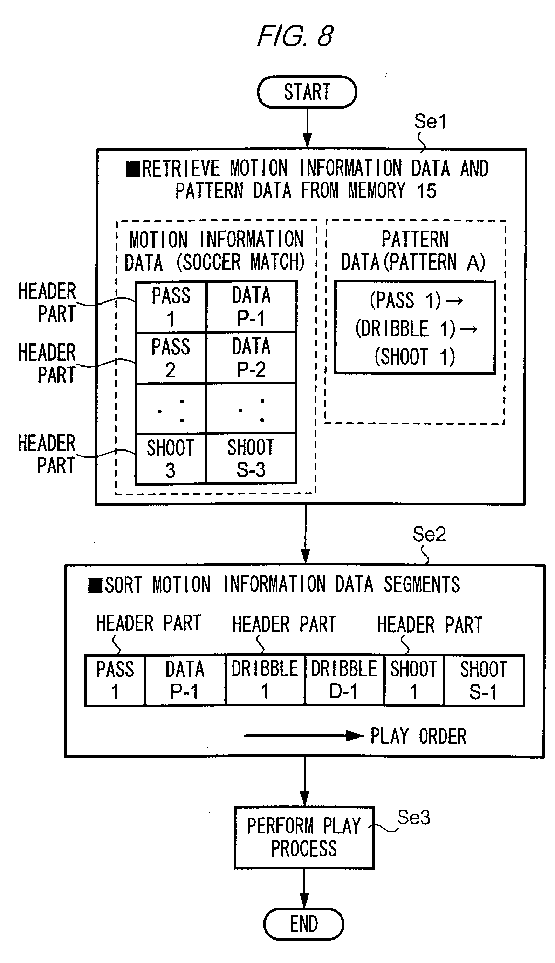

Fig.8 is a flowchart illustrating the process details of control unit 13 when a play process request occurs in MS 1.

At first, control unit 13 in MS1 retrieves motion information data and pattern data requested by a user from memory unit 15. (Step Se1) In this case, motion information data "Soccer Match" and pattern data "PD-A" are retrieved as an example.

Next, control unit 13 sorts motion information data segments comprising motion information data in compliance with the contents of pattern data PD-A.(Step Se2) In this case, motion information data segments are sorted in the order of data P-1, data D-1, data S-1 in compliance with the contents of pattern data PD-A.

Then, control unit 13 plays sorted motion information data segments . (Step Se3)

As mentioned above, according to system 100, a user of MS1 may enjoy motion pictures in various play orders selected by a user since the user can play motion information data on the basis of selecting pattern data.

### C. Modifications

The present invention is not limited to the embodiments described above, and may be modified within the scope of the invention. For example, the following modifications are possible.

### <Modification 1>

Content server 5 according to the above embodiments performs a control to transmit a data list for download when an access request is distributed to content server 5 from MS1, that is to say, content server 5 takes a data distribution form known as a pull type. However, content server 5 may take a lead when distributing a data list for download to MS1, that is to say, a data distribution form in a push type may be taken.

### <Modification 2>

According to the above embodiments, motion information data and pattern data are downloaded from content server 5, however, pattern data may be generated on the MS1 side by a user.

For example, a user plays individual motion information data segments and confirms the contents of motion information data segments after downloading motion information data comprising multiple motion information data segments. Then, a play order of motion information data segments which is reviewed may be registered with memory unit 15 in MS1 as pattern data.

A user can play motion information data in compliance with a user's preference more efficiently by generating pattern data in a user's MS1.

### <Modification 3>

According to the above embodiments, motion information data and pattern data are downloaded from content server 5, however, motion information data and pattern data may be exchanged between MS 1 via mobile packet communication network 3.

Further, motion information data may be downloaded from content server 5, and pattern data may be exchanged with another MS.

### <Modification 4>

Only motion information data and pattern data may be stored in memory unit 55 in content server 5. In this case, a system server controlling overall system 100 may be established on the Internet 4 separately, and a system server may perform a control, which is performed by control unit 53 in the above embodiments.

### <Modification 5>

A recording medium for recording a program according to the present invention is optional, for example, a semiconductor memory unit, an optical disk such as a CD-ROM(Compact Disk-Read Only Memory) or a CD-R(Compact Disc-Recordable), a magnetic optical disk such as a MO(Magneto Optic) and a MD(Mini Disk), a magnetic disk such as a floppy disk and a hard disk may be used, that is to say, a program may be provided to content server 5 via the above recording media.

Further, a program providing method to content server 5 is optional, for example, a program may be provided to memory unit 55 in content server 5 from a server(not shown here) on the Internet 4 in which a program related to the present invention is stored via a network, such as the Internet without using the above-described recording medias. That is to say, a net distribution mode may be used.

### <Modification 6>

According to the above embodiments, content server 5 is connected to the Internet 4. However, content server 5 may be connected to mobile packet communication network 3 via, for example, a private line. Further, content server 5 may be installed in mobile packet communication network 3.

### <Modification 7>

According to the above embodiments, it is described by using an example of MS1 having a packet communication function. However, the present invention may be applied to which data communication via mobile packet communication network 3 is performed, for example, PHS (Personal Handyphone System : Registered Mark), PDA(Personal Digital Assistant), or a mobile computer may be used.

Further, a mode of MS1 is optical, for example, it may be a card type, or something which is attached to a wrist or waist, or a pendant type, or a necklace type.

### <Modification 8>

Further, the present invention may be applied to a communication system which does not go through mobile communication network 3 and the like. In this case, a personal computer, PDA and the like may be used instead of MS 1. Moreover, Internet 4 may be the intranet, or LAN(Local Area Network) and the like.

### Effects of the Invention

As described above, the present invention makes it possible to provide a service which can play individual scenes by interchanging the individual scenes comprising motion information data in MS when the motion information data is played.

## Claims

1. A content server comprising:
a memory unit for storing motion information data comprised of multiple motion information data segments each of which can be played independently, and pattern data for designating an order in which said multiple motion information data segments are played;
a reception unit for receiving a download request from a mobile communication terminal via a network;
a control unit for generating download list data related to said motion information data and said pattern data; and
a transmission unit for transmitting to said mobile communication terminal via said network, said download list data designating which said motion information data and said pattern data are to be downloaded.

2. A content server according to Claim 1,
wherein one or multiple items of pattern data may be stored in said memory unit, and corresponding to one segment of motion information data.

3. A control method of a content server comprising:
a memory process for storing motion information data comprised of multiple motion information data segments each of which can be played independently, and pattern data for designating an order in which said multiple motion information data segments are played;
a reception process for receiving a download request from a mobile communication terminal via a network;
a control process for generating download list data related to said motion information data and said pattern data; and
a transmission process for transmitting to said mobile communication terminal via said network, said download list data designating which said motion information data and said pattern data are to be downloaded.

4. A mobile communication terminal comprising:
a memory unit for storing motion information data comprised of multiple motion information data segments each of which can be played independently, and pattern data for designating an order in which said multiple motion information data segments are played;
a control unit for generating a play data list related to said motion information data and said pattern data for enabling a user to designate which said motion information data and said pattern data are to be played; and
a display unit for displaying said play data list.

5. A mobile communication terminal according to Claim 4 comprising:
a transmission unit for transmitting a motion information data request or a pattern data request to a content server via a network; and
a reception unit for receiving motion information data or pattern data from said content server via said network.

6. A mobile communication terminal comprising:
a memory unit for storing motion information data including multiple motion information data segments each of which can be played independently;
an operation unit for designating an order in which multiple motion information data segments are played; and
a control unit for generating pattern data for playing said motion information data segments on the basis of said designated play order and storing said pattern data in said memory unit.

7. A control method of a mobile communication terminal comprising:
a memory process for storing motion information data comprised of multiple motion information data segments each of which can be played independently, and pattern data for designating an order in which said multiple motion information data segments are played;
a control process for generating a play data list related to said motion information data and said pattern data for enabling a user to designate which said motion information data and said pattern data are to be played; and
a display process for displaying said play data list.

8. A program product for causing a computer to perform:
a step of storing motion information data comprised of multiple motion information data segments each of which can be played independently, and pattern data for designating an order in which said multiple motion information data segments are played;
a step of receiving a download request from a mobile communication terminal via a network;
a step of generating download list data related to said motion information data and said pattern data; and
a step of transmitting to said mobile communication terminal via said network, said download list data for designating which said motion information data and said pattern data are to be downloaded.

9. A recording media readable by a computer, on which a program is recorded for causing a computer to perform:
a step of storing motion information data comprised of multiple motion information data segments each of which can be played independently, and pattern data for designating an order in which said multiple motion information data segments are played;
a step of receiving a download request from a mobile communication terminal via a network;
a step of generating download list data related to said motion information data and said pattern data; and
a step of transmitting to said mobile communication terminal via said network, said download list data for designating which said motion information data and said pattern data are to be downloaded.

10. A program product for causing a computer to perform:
a step of storing motion information data comprised of multiple motion information data segments each of which can be played independently, and pattern data for designating an order in which said multiple motion information data segments are played,
a step of generating a play data list related to said motion information data and said pattern data for enabling a user to designate which said motion information data and said pattern data are to be played; and
a step of displaying said play data list.

11. A recording media readable by a computer, on which a program is recorded for causing a computer to perform:
a step of storing motion information data comprised of multiple motion information data segments each of which can be played independently, and pattern data for designating an order in which said multiple motion information data segments are played;
a step of generating a play data list related to said motion information data and said pattern data for enabling a user to designate which said motion information data and said pattern data are to be played;
and a step for displaying said play data list.
